# EUROPEAN PATENT APPLICATION

(11) **EP 1 482 631 A2**
(43) Date of publication of application: **01.12.2004**
(21) Application number: 04012644.3
(22) Date of filing: 27.05.2004
(51) Int. Cl.: H02P 6/04

(54) **Mounting structure of a switching element at a heat sink**

(30) Priority: 28.05.2003 JP 2003150878
(71) Applicant: TOYODA KOKI KABUSHIKI KAISHA, Kariya-shi Aichi-ken (JP)
(72) Inventor: Kobayashi, Yukihiro, Kariya-shi Aichi-ken (JP); Watanabe, Yukihiro, Kariya-shi Aichi-ken (JP); Ushiroyama, Mitsuya, Kariya-shi Aichi-ken (JP)
(74) Representative: Leson, Thomas Johannes Alois, Dipl.-Ing.

(57) **Abstract**

An electronic control unit has a driving circuit for driving a motor by a PWM control, a heat sink provided at a substrate of the electronic control unit, at least one first switching element equipped to the driving circuit and switched on and off at a relatively high speed by the driving circuit, and at least one second switching element equipped to the driving circuit and switched on and off at a relatively low speed by the driving circuit. The at least one first switching element and the at least one second switching element are alternately arranged and fixed to the heat sink.

## Description

### FIELD OF THE INVENTION

This invention generally relates to a mounting structure of a switching element at a heat sink.

### BACKGROUND

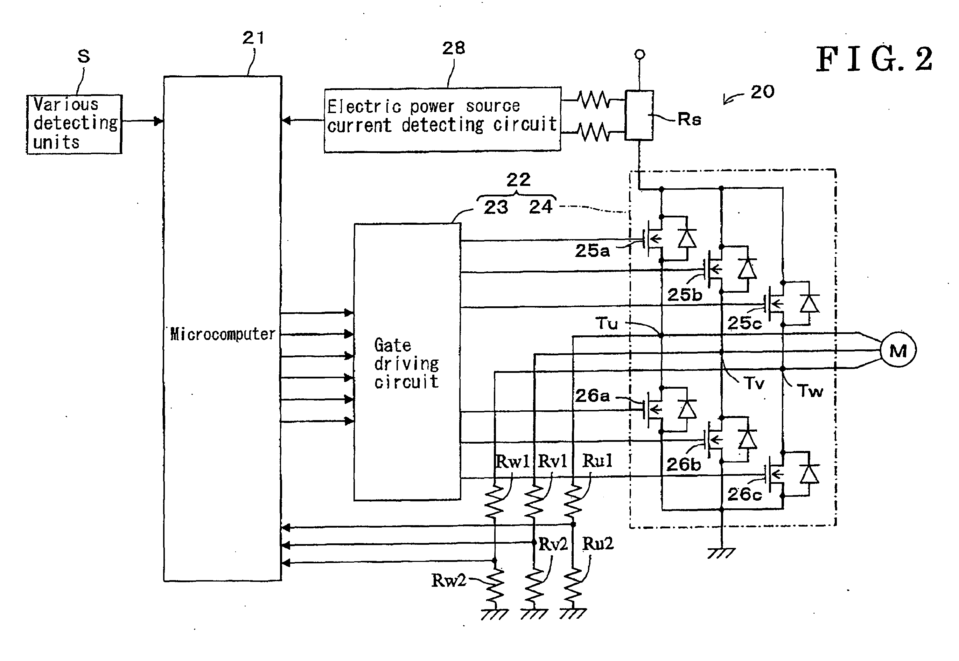

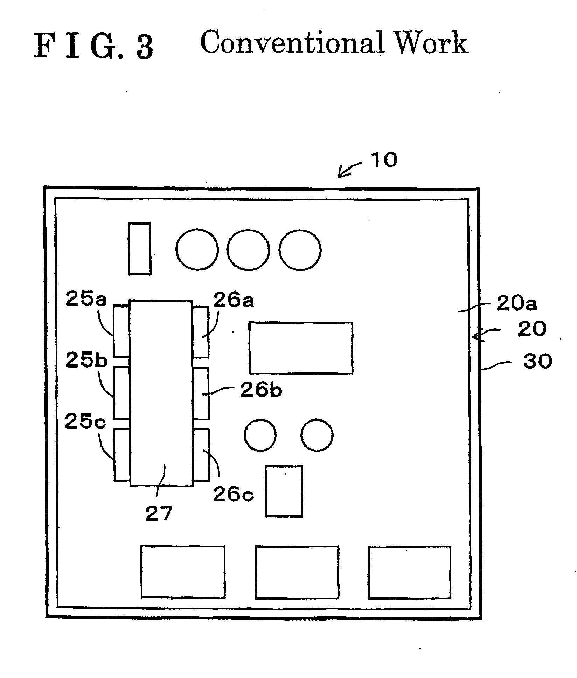

A motor driving circuit, which is configured with plural switching elements and controls a motor by a PWM (pulse width modulation) control, has been conventionally known. In the motor driving circuit, the plural switching elements are mounted at a heat sink. With reference to Figs. 2 and 3, the mounting structure of the plural switching elements at the heat sink is described below. The heat sink is equipped at a control substrate 20 of an ECU (electronic control unit) 10,

As illustrated in FIG. 3, the ECU 10 includes the control substrate 20 and a housing case 30 housing the control substrate 20 therein. As illustrated in FIG. 2, the control substrate 20 includes a microcomputer 21 and a motor driving circuit 22. Signals detected by various types of detecting units are inputted into the microcomputer 21. The microcomputer 21 computes a control value based upon the detected signals. Further, the microcomputer 21 computes the PWM value for a motor M based upon the control value. Accordingly, the motor M can be driven in response to the PWM value transmitted from the microcomputer 21 through the motor driving circuit 22.

The motor driving circuit 22 includes a gate driving circuit 23 and an inverter circuit 24. According to an embodiment of the present invention, the inverter circuit 24 includes plural switching elements; three switching elements 25a, 25b, and 25c disposed at an upstream thereof, and the other three switching elements 26a, 26b, and 26c disposed at a downstream thereof. Each of the switching elements 25a, 25b, 25c, 26a, 26b, and 26c is a MOSFET (metal oxide semiconductor field-effect transistor), as a non-limiting example. A drain terminal of each switching element 25a, 25b, and 25c at the upper side is connected to a battery as a DC power source via a shunt resistance Rs, a gate terminal thereof is connected to the gate driving circuit 23, and a source terminal thereof is connected to a drain terminal of each switching element 26a, 26b, and 26c. In the meantime, a gate terminal of each switching element 26a, 26b, and 26c at the lower side is also connected to the gate driving circuit 23, and a source terminal thereof is grounded. The motor M includes three field wires; a U-phase wire, a V-phase wire, and a W-phase wire that are not shown. These U-phase wire, V-phase wire, and W-phase wire are connected to intermediate points Tu, Tv, and Tw between the switching elements 25a and 26a, between the switching elements 25b and 26b, and between the switching elements 25c and 26c. The intermediate points Tu, Tv, and Tw are grounded via first and second resistances Ru1 and Ru2, first and second resistances Rv1 and Rv2, and first and second resistances Rw1 and Rw2, respectively. Each voltage between the first and second resistances Ru1 and Ru2, between the first and second resistances Rv1 and Rv2, and between the first and second resistances Rw1 and Rw2 corresponds to voltage generated by dividing motor terminal voltage of the U-phase, V-phase and W-phase. The voltage between each resistance can be inputted into the microcomputer 21.

In order to drive the motor M by the ECU 10 with the above described structure, the microcomputer 21 switches on and off the switching elements 26a, 26b, and 26c (i.e., high-speed switching element) at a relatively high speed, and switches on and off the switching elements 25a, 25b, and 25c (i.e., low-speed switching element) at a relatively low speed. Any of the switching elements heat up due to switching on and off. Especially, the switching elements 26a, 26b, and 26c heat up greatly among all the switching elements. Therefore, in order to radiate heat of the switching elements, the heat sink 27 is provided at the control substrate 20. More particularly, the switching elements 25a, 25b, 25c, 26a, 26b, and 26c are mounted at a substrate 20a of the control substrate 20. These switching elements are fixed to the heat sink at an upper surface of the substrate 20a.

However, as illustrated in FIG. 3, the high-speed switching elements 26a, 26b, and 26c are fixed to one side surface of the heat sink 27, and the low-speed switching elements 25a, 25b, and 25c are fixed to the other side surface thereof. The one side surface of the heat sink is substantially in parallel with the other side thereof. That is, the high-speed switching elements 26a, 26b, and 26c as a high heat source concentrates at the one side of the heat sink 27. In this case, heat radiating performance of the heat sink 27 may become deteriorated. Further, it may become inevitable that electrical components around the heat sink 27 may be influenced due to high temperature.

The present invention exists for providing an improved unit having a heat sink and high-speed switching elements arranged without being concentrated, thereby effectively reducing deterioration of heart radiating performance of the heat sink and avoiding temperature influence to adjacent electrical components as much as possible.

### SUMMARY OF THE INVENTION

According to an aspect of the present invention, an electronic control unit has a driving circuit for driving a motor by a PWM control, a heat sink provided at a substrate of the electronic control unit, at least one first switching element equipped to the driving circuit and switched on and off at a relatively high speed by the driving circuit, and at least one second switching element equipped to the driving circuit and switched on and off at a relatively low speed by the driving circuit. The at least one first switching element and the at least one second switching element are alternately arranged and fixed to the heat sink.

It is preferable that the at least one first switching element is fixed to the heat sink at a distant from other electrical components at the substrate of the electronic control unit.

### BRIEF DESCRIPTION OF THE DRAWINGS

The foregoing and additional features and characteristics of the present invention will become more apparent from the following detailed description considered with reference to the accompanying drawings, wherein:

Fig. 1 is a plan view illustrating an internal structure of an ECU having a control substrate with switching elements fixed to a heat sink according to an embodiment of the present invention;

Fig. 2 is a block view of the control substrate illustrated in Fig. 1; and

Fig. 3 is a plan view illustrating a conventional internal structure of an ECU having a control substrate with a switching element fixed to a heat sink.

### DETAILED DESCRIPTION

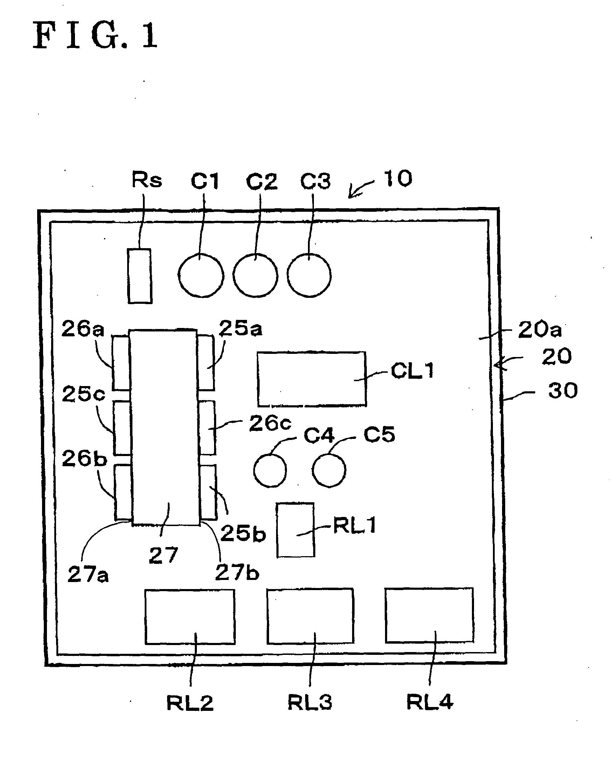

As illustrated in Figs. 1 and 2, according to an embodiment of the present invention, a heat sink mounting a switching element thereon is equipped at a control substrate 20 of an ECU (electronic control unit) 10 controlling an electric power steering. The ECU 10 has the control substrate 20 and a housing case 30 housing the control substrate 20 therein. The control substrate 20 has a substrate 20a and various types of electrical components. As illustrated in FIG. 2, the control substrate 20 includes a microcomputer 21 and a motor driving circuit 22. Signals detected by various types of detecting units are inputted into the microcomputer 21. The microcomputer 21 computes a control value based upon the detected signals. Further, the microcomputer 21 computes PWM (pulse width modulation) value for a motor M based upon the control value. Accordingly, the motor M can be driven in response to the PWM value transmitted from the microcomputer 21 through the motor driving circuit 22. The motor M is a three-phase synchronous type brushless motor having permanent magnets, as a non-limiting example.

The motor driving circuit 22 includes a gate driving circuit 23 and an inverter circuit 24. According to the embodiment of the present invention, the inverter circuit 24 is equipped with plural switching elements; three switching elements 25a, 25b, and 25c arranged at an upstream thereof, and the other three switching elements 26a, 26b, and 26c arranged at a downstream thereof. Each of the switching elements 25a, 25b, 25c, 26a, 26b, and 26c is a MOSFET (metal oxide semiconductor field-effect transistor), as a non-limiting example. A drain terminal of each switching element 25a, 25b, and 25c at the upper side is connected to a battery as a DC power source via a shunt resistance Rs, a gate terminal thereof is connected to the gate driving circuit 23, and a source terminal thereof is connected to a drain terminal of each switching element 26a, 26b, and 26c. In the meantime, a gate terminal of each switching element 26a, 26b, and 26c at the lower side is also connected to the gate driving circuit 23, and a source terminal thereof is grounded. The motor M is provided with three field wires; a U-phase wire, a V-phase wire, and a W-phase wire that are not shown. These U-phase wire, V-phase wire, and W-phase wire are respectively connected to intermediate points Tu, Tv, and Tw between the switching elements 25a and 26a, the switching elements 25b and 26b, and the switching elements 25c and 26c. The intermediate points Tu, Tv, and Tw are grounded via first and second resistances Ru1 and Ru2, via first and second resistances Rv1 and via Rv2, and via first and second resistances Rw1 and Rw2, respectively. Each voltage between the first and second resistances Ru1 and Ru2, between the first and second resistances Rv1 and Rv2, and between the first and second resistances Rw1 and Rw2 corresponds to voltage generated by dividing motor terminal voltage of the U-phase, V-phase and W-phase. The voltage between each resistance can be inputted into the microcomputer 21. An electric power source current detecting circuit 28 connected to the shunt resistance Rs detects a value of voltage of the shunt resistance Rs, calculates a value of current applied to the motor M based upon the voltage value of the shunt resistance Rs. The current value can be inputted into the microcomputer 21.

In order to drive the motor M by the ECU 10 with the above described structure, the microcomputer 21 switches on and off the switching elements 26a, 26b, and 26c (i.e., at least one first switching element) at a relatively high speed in accordance with duty control, and switches on and off the switching elements 25a, 25b, and 25c (i.e., at least one second switching elements) at a relatively low speed. Any of the switching elements heat up due to switching on and off. Especially, the switching elements 26a, 26b, and 26c heat up greatly among all the switching elements. Therefore, in order to radiate heat of the switching elements, the heat sink 27 is provided at the control substrate 20. More particularly, the switching elements 25a, 25b, 25c, 26a, 26b, and 26c are mounted at a substrate 20a of the control substrate 20. These switching elements are fixed to the heat sink at an upper surface of the substrate 20a.

The high-speed switching element is switched on and off using PWM control with a predetermined duty ratio for a first predetermined period of time. The high-speed switching element is then switched off for a second predetermined period of time following the first period of time. As aforementioned, the high-speed switching element is alternately shifted between the state being applied with the PWM control and the state not being applied with voltage. In the meantime, the low-speed switching element can be kept under an on condition for the first predetermined period of time while the high-speed switching element has been controlled by the PWM control. That is, the low-speed switching element can be switched on and off at fewer switching operations than the one of the high-speed switching element and at a longer cycle than the one of the high-speed switching element.

According to the embodiment of the present invention, the heat sink 27 has a substantially rectangular shape. The switching elements 25a, 25b, 25c, 26a, 26b, and 26c are fixed to the heat sink 27 without being one-sided. As illustrated in Fig. 1, the switching elements 26a, 26b, and 25c are fixed to one side surface 27a of the heat sink 27, which is located at an outside of the control substrate 20. The switching elements 26a, 25c, and 26b can be preferably arranged in this sequence at the side surface 27a. The switching elements 25a, 25b, and 26c are fixed to the other side surface 27b of the heat sink 27, which is located at an inside of the control substrate 20. The switching elements 25a, 26c, and 25b can be preferably arranged in this sequence at the side surface 27b. That is, the high-speed switching element and the low-speed switching element can be arranged alternately. In other words, the high-speed switching elements do not have to be concentrated. Therefore, it can effectively prevent heat radiating performance of the heat sink 27 from being deteriorated and avoid influence to adjacent electrical components due to high temperature as much as possible.

Further, it is preferable that the heat sink 27 is arranged at an end portion of the substrate 20a rather than at a central portion thereof. According to the embodiment of the present invention, the heat sink 27 has the substantially rectangular shape. Alternatively, the heat sink 27 can possess a cross section of a U-shaped structure or the like. Whichever shape the heat sink 27 has, it is preferable to provide a heat-radiating fin.

The substrate 20a is provided not only with the above-described switching elements and the heat sink 27 but also with other electrical components such as the shunt resistance Rs, condensers C1 through C5, a coil CL1, and relays RL1 through RL4, as non-limiting examples. The high-speed switching elements 26a, 26b, and 26c are arranged at a distance from these electrical components. Therefore, it enables to more reliably prevent the adjacent electrical components from being influenced due to high temperature.

As described above, according to the embodiment of the present invention, the high-speed switching elements 26a and 26b can be arranged at the one side surface 27a of the heat sink 27. There are fewer electrical components mounted near the one side surface 27a of the heat sink 27 rather than near the other side surface 27b thereof. Therefore, it enables to more reliably prevent the adjacent electrical components from being influenced due to high temperature.

According to the embodiment of the present invention, the switching element is formed with the MOSFET. Alternatively, the switching element can be formed with a bipolar type transistor or IGBT (insulated gate bipolar transistor), as non-limiting examples.

Further, according to the embodiment of the present invention, the motor M is formed with a three-phase synchronous type brushless motor having permanent magnets. Alternatively, the motor M can be formed with a synchronous permanent magnet motor as a non-limiting example. Further, the motor M does not have to be limited to the brushless motor and can be a DC motor as a non-limiting example.

Still further, according to the embodiment of the present invention, the control substrate 20 equipped with the heat sink and the switching elements is applied to the ECU 10 for controlling the electric power steering. Alternatively, the control substrate 20 equipped with the heat sink and the switching elements can be applied to other types of control unit for controlling a motor.

Still further, according to the embodiment of the present invention, the switching elements 25a, 25b, and 25c at the upper side are the low-speed switching elements, and the switching elements 26a, 26b, and 26c at the lower side are the high-speed switching elements. Alternatively, the switching elements 25a, 25b, and 25c at the upper side can be the high-speed switching elements, and the switching elements 26a, 26b, and 26c at the lower side can be the low-speed switching elements.
An electronic control unit has a driving circuit for driving a motor by a PWM control, a heat sink provided at a substrate of the electronic control unit, at least one first switching element equipped to the driving circuit and switched on and off at a relatively high speed by the driving circuit, and at least one second switching element equipped to the driving circuit and switched on and off at a relatively low speed by the driving circuit. The at least one first switching element and the at least one second switching element are alternately arranged and fixed to the heat sink.

## Claims

1. An electronic control unit comprising:
a driving circuit for driving a motor;
a heat sink provided at a substrate of the electronic control unit;
at least one first switching element equipped to the driving circuit and switched on and off at a relatively high speed by the driving circuit; and
at least one second switching element equipped to the driving circuit and switched on and off at a relatively low speed by the driving circuit,
wherein the at least one first switching element and the at least one second switching element are alternately arranged and fixed to the heat sink.

2. An electronic control unit according to claim 1, wherein the heat sink has one surface near outside of the substrate and an other surface near a central portion of the substrate, the at least one first switching element is fixed to the one surface, and the at least one second switching element is fixed to the other surface.

3. An electronic control unit according to claim 1, wherein the heat sink has one surface near outside of the substrate and an other surface near a central portion of the substrate; the at least one first switching elements and the at least one second switching elements are alternately arranged at the one surface and the other surface of the heat sink.

4. An electronic control unit according to claim 1, wherein the at least one first switching element is fixed to the heat sink at a distant from other electrical components at the substrate of the electronic control unit.

5. An electronic control unit according to claim 1, wherein the driving circuit drives the motor by a PWM control.
